# EUROPÄISCHE PATENTSCHRIFT

(11) **EP 3 049 311 B1**
(45) Veröffentlichungstag und Bekanntmachung des Hinweises auf die Patenterteilung: **06.09.2017**
(21) Anmeldenummer: 14742468.3
(22) Anmeldetag: 22.07.2014
(51) Int. Cl.: B62D 25/14, B62D 65/14

(54) **INSTRUMENTENTAFELQUERTRÄGER FÜR EIN FAHRZEUG SOWIE FAHRZEUG MIT EINEM SOLCHEN INSTRUMENTENTAFELQUERTRÄGER**
INSTRUMENT PANEL CROSSMEMBER FOR A VEHICLE AND VEHICLE WITH SUCH AN INSTRUMENT PANEL CROSSMEMBER
BARRE TRANSVERSALE DE TABLEAU DE BORD POUR VÉHICULE AUTOMOBILE ET VÉHICULE AUTOMOBILE ÉQUIPÉ D'UNE TELLE BARRE TRANSVERSALE DE TABLEAU DE BORD

(30) Priorität: 27.09.2013 DE 102013016133
(43) Veröffentlichungstag der Anmeldung: 03.08.2016
(73) Patentinhaber: Audi AG, 85045 Ingolstadt (DE)
(72) Erfinder: NONNENBROICH, Klaus, 85084 Reichertshofen (DE); MERK, Thomas, 86609 Donauwörth (DE)
(86) Internationale Anmeldenummer: PCT/EP2014/002005
(87) Internationale Veröffentlichungsnummer: WO 2015/043691

(56) Entgegenhaltungen:
- DE-A1-102007 054 535
- FR-A1- 2 791 313
- FR-A1- 2 911 315

## Beschreibung

Die Erfindung betrifft ein Instrumententafelquerträger für ein Fahrzeug mit Montageaufnahmen zur Abstützung in einem Vormontagegestell und zur Aufnahme durch ein Handhabungsgerät gemäß Oberbegriff des Patentanspruchs 1. Die FR 2 911 315 A1 offenbart einen solchen Instrumententafelquerträger. Ferner betrifft die Erfindung ein Fahrzeug mit einem erfindungsgemäßen Instrumententafelquerträger.

Instrumententafelquerträger erstrecken sich über die gesamte Breite eines Fahrzeugs und dienen bekannterweise dazu, Anbauteile wie Bedien- und Anzeigekomponenten, Klimamodul, Audiomodul sowie Kabelbäume und Versorgungsleitungen aufzunehmen. Daher stellt ein solcher Instrumententafelquerträger, der sich inzwischen den beiden A-Säulen des Fahrzeugs erstreckt, das Traggerüst der Instrumententafel bzw. des Armaturenbrettes dar. Ferner gehört zur Aufgabe eines solchen Instrumententafelquerträgers sowohl eine möglichst steife Anbindung der Lenkung und diverser Sicherheitskomponenten an die Fahrzeugkarosserie als auch die toleranzempfindliche Aufnahme eines Schalttafelkörpers sowie der oben genannten Anbauteile.

Die Vormontage als erste Montagephase einer solchen Instrumententafel erfolgt in einem Vormontagegestell, in welchem der Instrumententafelquerträger um seine Längsachse drehbar gelagert ist. Im Laufe dieses Vormontageprozesses werden die einzelnen Komponenten der Instrumententafel, wie Head-up-Display, Kabelstrang, Klimaanlage, Lenkung, Airbag, Schalttafel usw. an diesem Instrumententafelquerträger direkt oder indirekt befestigt. Während dieses Prozesses wird der Instrumententafelquerträger um seine Achse gedreht und dabei Torsions- und Biegebeanspruchungen ausgesetzt, welche zu elastischen Verformungen des Instrumententafelquerträgers führen.

Dieser derart vormontierte Instrumententafelquerträger wird in einer zweiten Montagephase mittels eines Handhabungsgerätes aus dem Vormontagegestell entnommen. Hierzu weist der Instrumententafelquerträger Montageaufnahmen auf, in die mittels des Handhabungsgerätes eingegriffen und so der vormontierte Instrumententafelquerträger aus dem Vormontagegestell entnommen und an ein Fahrzeugmontageband befördert wird. Dort wird der vormontierte Instrumententafelquerträger in die Fahrzeugkarosserie durch die für die Seitentüren vorgesehenen Öffnungen eingeführt, wobei dies geradlinig oder auch in einer Neigung um die Y-Achse erfolgen kann. Auch dabei wird der Instrumententafelquerträger aufgrund der hohen Gewichtskraft der vormontierten Komponenten verformt.

Schließlich wird in einer dritten Montagephase von dem Handhabungsgerät der vormontierte Instrumententafelquerträger in der Fahrzeugkarosserie auf speziellen Bolzen an den A-Säulen abgelegt. Das Handhabungsgerät wird wieder aus der Fahrzeugkarosserie entfernt, um für den nächsten Montagetakt zur Verfügung zu stehen. Zum Schluss werden vom Montagepersonal Schrauben und Muttern an die Rohbauschnittstellen gesetzt und festgezogen.

Durch die während dieser drei Montagephasen auftretenden unterschiedlichen mechanischen Belastungen wird der Instrumententafelquerträger elastisch verformt, so dass hierdurch unvermeidliche Maßabweichungen während der einzelnen Montagephasen fixiert und im Endergebnis zu unerwünschten Abweichungen in den Fugenverläufen der Anbauteile und speziell in der Ausrichtung auch bspw. eines Head-Up-Displays führt.

Eine naheliegende Lösung dieses Problems bestünde in einer weiteren Aussteifung des Instrumententafelquerträgers als freitragendes Strukturteil und dessen Herstellung mit einer höheren Genauigkeit, die für ein Head-up-Display benötigt wird. Jedoch kann diese Lösung vor dem Hintergrund von Vorgaben hinsichtlich Leichtbau und Schalttafelvolumen nicht realisiert werden.

Aufgabe der Erfindung ist es daher, einen Instrumententafelquerträger der eingangs genannten Art zu schaffen, bei welchem die oben genannten Nachteile während des gesamten Montageprozesses vermieden werden, insbesondere sowohl die Vorgaben hinsichtlich Leichtbau in der Tragstruktur erfüllt als auch Voraussetzungen für die hochgenaue und automatisierte Einrichtung eines Head-up-Display geschaffen werden.

Diese Aufgabe wird gelöst durch einen Instrumententafelquerträger mit den Merkmalen des Patentanspruchs 1.

Ein solcher Instrumententafelquerträger für ein Fahrzeug mit Montageaufnahmen zur Abstützung in einem Vormontagegestell und zur Aufnahme durch ein Handhabungsgerät, der U-förmig mit einem Basisabschnitt und zwei Schenkelabschnitten zur Verbindung mit den A-Säulen des Fahrzeugs ausgebildet ist, wobei der Basisabschnitt wenigstens eine mit einem Fahrzeugtunnel verbindbare Tunnelstütze des Fahrzeugs und wenigstens ein im wesentlichen in Fahrzeuglängsrichtung und zur Fahrerseite abgewandten Richtung verlaufendes Abstützelement ausgebildet ist; erfindungsgemäß ist vorgesehen, dass
- zur zusätzlichen Abstützung des Instrumententafelquerträgers in Fahrzeughochrichtung im Vormontagegestell das Abstützelement mit einer Z-Aufnahme ausgebildet ist, und
- zur zusätzlichen Abstützung des Instrumententafelquerträgers in Fahrzeughochrichtung und in Fahrzeuglängsrichtung im Handhabungsgerät die Tunnelstütze mit einer X/Z-Aufnahme ausgebildet ist.

Mit solchen Z- und X/Z-Aufnahmen wird der vormontierte Instrumententafelquerträger ohne durch Gewichtskräfte oder Montagekräfte bewirkte mechanische Verspannungen und ohne nennenswerten Durchhang in der Struktur des Instrumententafelquerträgers in der Fahrzeugkarosserie montiert, ohne dass Zugeständnisse an Gewicht oder Bauraumbedarf des Instrumententafelquerträgers gemacht werden müssen.

Die Z-Aufnahme stützt sich während der gesamten ersten Montagephase auf einem Bolzen am Vormontagegestell in Z-Richtung ab. Zur Durchführung der zweiten Montagephase hebt das Handhabungsgerät den vormontierten Instrumententafelquerträger aus dem Vormontagegestell ab, indem gleichzeitig der Instrumententafelquerträger an der wenigstens einen Tunnelstütze ergriffen und zusätzlich mittels der X/Z-Aufnahme in Fahrzeuglängsrichtung und Fahrzeughochrichtung fixiert wird. Damit geht die erste Montagephase unter lückenloser Abstützung des Instrumententafelquerträgers in Z-Richtung in die zweite Montagephase über.

Während der dritten Montagephase bleibt das Handhabungsgerät so lange in der Fahrzeugkarosserie, bis drei Schrauben, welche die Lage und die Form des Instrumententafelquerträgers bestimmen, durch das Montagepersonal angezogen sind. Erst dann wird das Handhabungsgerät aus der Fahrzeugkarosserie herausgefahren.

Nach einer vorteilhaften Weiterbildung der Erfindung ist die Z-Aufnahme als in Fahrzeugquerrichtung verlaufendes Flanschelement an das Abstützelement angeformt, wobei zur Abstützung eine in Fahrzeugquerrichtung verlaufende Stirnfläche des Flanschelementes als Auflagefläche ausgebildet ist. Diese Z-Aufnahme ist konstruktiv einfach zu realisieren und benötigt im Wesentlichen keinen zusätzlichen Bauraum.

In vorteilhafter Weise ist weiterbildungsgemäß die X/Z-Aufnahme als in Fahrzeuglängsrichtung verlaufendes Flanschelement an die Tunnelstütze angeformt, wobei eine in Fahrzeuglängsrichtung verlaufende Stirnfläche des Flanschelementes zur Abstützung in Fahrzeughochrichtung und eine in Fahrzeughochrichtung verlaufende Stirnfläche des Flanschelementes zur Abstützung in Fahrzeuglängsrichtung ausgebildet. Vorzugsweise ist das Flanschelement der X/Z-Aufnahme mit einer Aussparung versehen.

Eine solche X/Z-Aufnahme ist ebenso konstruktiv einfach zu realisieren und erfordert im Wesentlichen keinen zusätzlichen Bauraum.

Mit Vorteil ist ein solcher erfindungsgemäßer Instrumententafelquerträger für die Verwendung in einem Fahrzeug, insbesondere einem Kraftfahrzeug geeignet.

Die Erfindung wird nachfolgend anhand eines Ausführungsbeispiels unter Bezugnahme auf die beigefügten Figuren ausführlich beschrieben. Es zeigen:
- Figur 1: eine schematische und perspektivische Darstellung eines Instrumententafelquerträgers gemäß der Erfindung,
- Figur 2: eine Darstellung eines Details A mit einer Z-Aufnahme im Bereich eines Abstützelementes des Instrumententafelquerträgers nach Figur 1,
- Figur 3: eine Darstellung eines Details B mit einer X/Z-Aufnahme im Bereich einer Tunnelstütze des Instrumententafelquerträgers nach Figur 1,
- Figur 4: eine schematische und perspektivische Detaildarstellung eines Vormontagegestelles mit einem im Bereich der Z-Aufnahme dargestellten Instrumententafelquerträger nach Figur 1, und
- Figur 5: eine schematische und perspektivische Detaildarstellung eines Handhabungsgerätes mit einem im Bereich der X/Z-Aufnahme dargestellten Instrumententafelquerträger gemäß Figur 1.

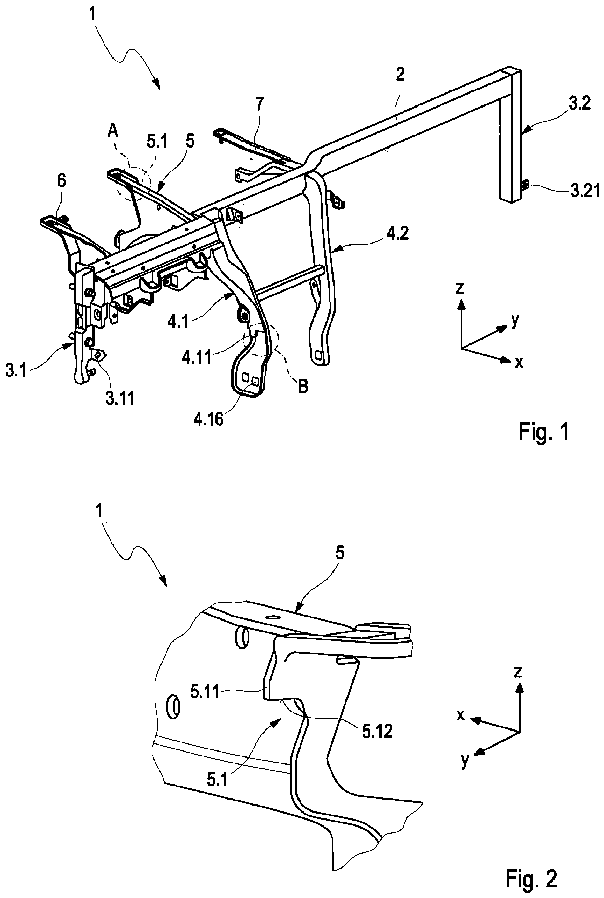

Nach Figur 1 weist der für ein Fahrzeug vorgesehene Instrumententafelquerträger 1 im Wesentlichen eine U-Form mit einem Basisabschnitt 2 und zwei Schenkelabschnitten 3.1 und 3.2 auf, wobei über diese beiden Schenkelabschnitte 3.1 und 3.2 der Instrumententafelquerträger 1 u. a. mit den A-Säulen des Fahrzeugs (in Figur 1 nicht dargestellt) mittels Montagebohrungen 3.11 und 3.21 verbunden wird.

Dieser Instrumententafelquerträger 1 umfasst fahrerseitig einen Tunnelstütze 4.1 und eine Tunnelstütze 4.2, welche zur Verbindung mit einem Tunnel des Fahrzeugs vorgesehen sind.

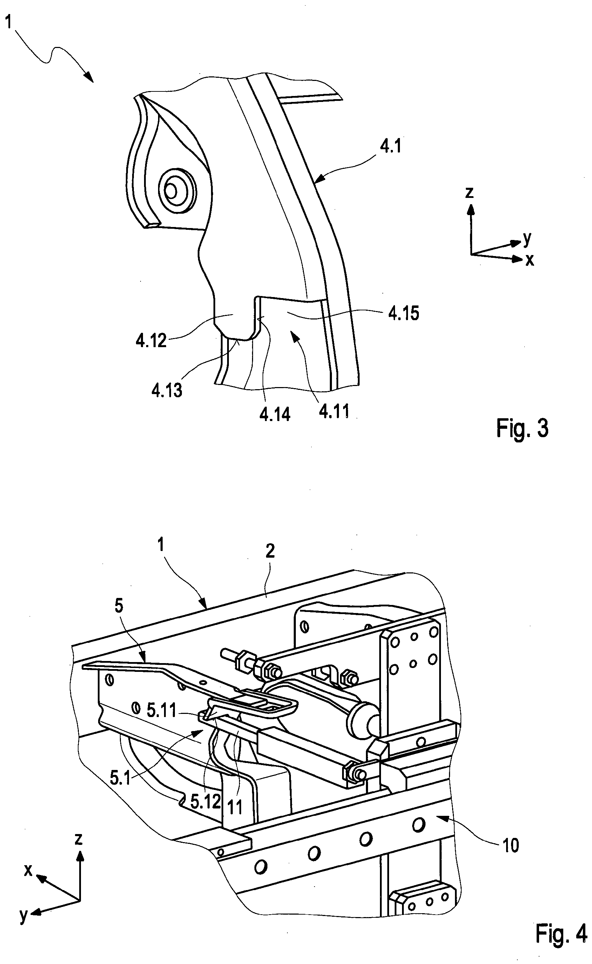

Auf der fahrerabgewandten Seite des Instrumententafelquerträgers 1 sind mehrere Abstützelemente 5, 6 und 7 angeformt, wobei das Abstützelement 5 mit einer in Figur 2 detaillierter dargestellten Z-Aufnahme 5.1 (Detail A) ausgebildet ist, die zur Abstützung in Z-Richtung des Instrumententafelquerträgers 1 dient, wenn dieser in seitlichen Aufnahmen im Bereich der Schenkelabschnitte 3.1 und 3.2 schwenkbar in einem Vormontagegestell gelagert ist. Diese Situation ist in Figur 4 dargestellt, in der teilweise der Basisabschnitt 2 mit dem Abstützelement 5 des Instrumententafelquerträgers 1 sowie ein Teil eines solchen Vormontagegestelles 10 zu erkennen ist. Hiernach erfolgt die Abstützung des Instrumententafelquerträgers 1 in Z-Richtung mittels eines mit dem Vormontagegestell 10 verbundenen Bolzens 11, auf dem der Instrumententafelquerträger 1 mittels einer an dem Abstützelement 5 angeformten Z-Aufnahme 5.1 auffliegt.

Gemäß Figur 2 ist diese Z-Aufnahme 5.1 als ein im Wesentlichen in der Z-Y-Ebene verlaufenden Flanschelement 5.11 ausgeführt, so dass die in Y-Richtung verlaufende Stirnfläche 5.12 als Auflagefläche auf dem Bolzen 11 des Vormontagegestelles 10 auffliegt.

In diesem Vormontagegestell 10 wird der Instrumententafelquerträger 1 mit den in der Beschreibungseinleitung erwähnten Komponenten vervollständigt, so dass dieser derart vormontierte Instrumententafelquerträger 1 mittels eines Handhabungsgerätes in die Fahrzeugkarosserie des Fahrzeugs eingebracht und dort montiert werden kann.

Zum Ausheben des vormontierten Instrumententafelquerträgers 1 aus dem Vormontagegestell 10 greift das Handhabungsgerät 20 in Aufnahmen des Instrumententafelquerträgers 1 ein, die im Bereich der Schenkelabschnitte 3.1 und 3.2 vorgesehen sind. Gleichzeitig greift dieses Handhabungsgerät 20 in eine von einer X/Z-Aufnahme 4.11 der Tunnelstütze 4.1 gebildeten Aussparung 4.15 ein und fixiert den Instrumententafelquerträger 1 zusätzlich in Z- und X-Richtung. Eine solche X/Z-Aufnahme 4.11 zeigt Figur 3.

Gemäß Figur 3 ist diese X/Z-Aufnahme 4.11 im mittleren Bereich der Tunnelstütze 4.1 angeformt und als Flanschelement 4.12 mit der Aussparung 4.15 ausgebildet. Das Flanschelement 4.12 weist zwei rechtwinklig zueinander orientierte Stirnflächen 4.13 und 4.14 auf, wobei die Stirnfläche 4.13 in X-Richtung und die Stirnfläche 4.14 in Z-Richtung verläuft.

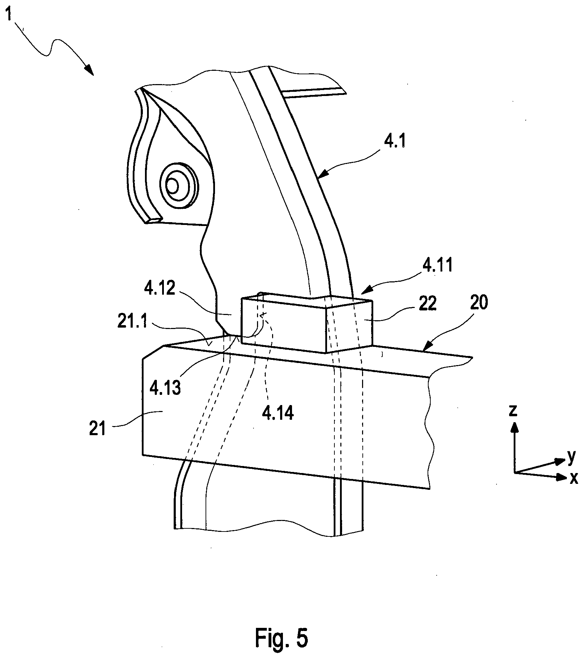

In Figur 5 ist ein schematisch angedeutetes Handhabungsgerät 20 mit einem in die X/Z-Aufnahme 4.11 der Tunnelstütze 4.1 eingreifendes Eingriffselement 21 dargestellt, wobei nur der die X/Z-Aufnahme 4.11 aufweisende Teil der Tunnelstütze 4.1 zu erkennen ist. Dieses Eingriffselement 21 weist einen rechteckförmigen Querschnitt auf, so dass dessen obere Stirnfläche 21.1 eine Auflagefläche für die Stirnfläche 4.13 des Flanschelementes 4.12 bildet und gleichzeitig in die Aussparung 4.15 in X-Richtung einfahren kann, bis die Stirnfläche 4.14 des Flanschelementes 4.12 an einem auf der Stirnfläche 21.1 des Eingriffselementes 21 angeordneten quaderförmigen Anschlag 22 anschlägt.

Erst nach dem Eingriff des Eingriffselementes 21 in die X/Z-Aufnahme 4.11 der Tunnelstütze 4.1 wird der Instrumententafelquerträger 1 aus dem Vormontagegestell 10 mittels des Handhabungsgerätes 20 abgehoben und in die Fahrzeugkarosserie verbracht, so dass ein Übergang von der ersten Montagephase mit einer lückenlosen Z-Unterstützung des Instrumententafelquerträgers 1 in die zweite Montagephase erreicht wird.

In der dritten Montagephase bleibt das Handhabungsgerät 20 so lange in der Fahrzeugkarosserie, bis zumindest mit drei Schrauben, welche die Lage und die Form des Instrumententafelquerträgers 1 bestimmen, der Instrumententafelquerträger 1 mit der Fahrzeugkarosserie verbunden ist. Eine der Schnittstellen stellt eine Montagebohrung 4.16 an der Tunnelstütze 4.1 dar, mit der diese Tunnelstütze 4.1 mit dem Tunnel der Fahrzeugkarosserie verbunden wird. Desweiteren wird über die Montagbohrungen 3.11 und 3.21 an den beiden Schenkelabschnitten 3.1 und 3.2 der Instrumententafelquerträger 1 mit den A-Säulen der Fahrzeugkarosserie verbunden. Ist der Instrumententafelquerträger 1 in dieser Weise in der Fahrzeugkarosserie montiert, wird das Handhabungsgerät 20 aus der Fahrzeugkarosserie ausgefahren.

Damit wird der vormontierte Instrumententafelquerträger 1 über den gesamten Montageprozess, also von der Vormontage in dem Vormontagegestell 10 bis zur Montage in der Fahrzeugkarosserie mittels des Handhabungsgerätes 20 ohne durch Gewichts- oder Montagekräfte verursachte Verspannungen bzw. ohne wesentlichen Durchhang in Z-Richtung unterstützt. Durch diese Art des kontinuierlich unterstützten Montageprozesses wird die Voraussetzung für Leichtbau in der Tragstruktur einer Fahrzeugkarosserie sowie für die hochgenaue und automatisierte Einrichtung eines Head-up-Displays geschaffen.

### Bezugszeichen

- 1: Instrumententafelquerträger
- 2: Basisabschnitt des Instrumententafelquerträgers 1
- 3.1: Schenkelabschnitt des Instrumententafelquerträgers 1
- 3.11: Montagebohrung des Schenkelabschnittes 3.1
- 3.2: Schenkelabschnitt des Instrumententafelquerträgers 1
- 3.21: Montagebohrung des Schenkelabschnittes 3.2
- 4.1: Tunnelstütze des Instrumententafelquerträgers 1
- 4.11: X/Z-Aufnahme der Tunnelstütze 4.1
- 4.12: Flanschelement der X/Z-Aufnahme 4.11
- 4.13: Stirnfläche des Flanschelementes 4.12
- 4.14: Stirnfläche des Flanschelementes 4.12
- 4.15: Aussparung des Flanschelementes 4.12
- 4.16: Montagebohrung der Tunnelstütze 4.1
- 4.2: Tunnelstütze des Instrumententafelquerträgers 1.
- 5: Abstützelement des Instrumententafelquerträgers 1
- 5.1: Z-Aufnahme des Abstützelementes 5
- 5.11: Flanschelement der Z-Aufnahme 5.1
- 5.12: Stirnfläche des Flanschelementes 5.11
- 6: Abstützelement des Instrumententafelquerträgers 1
- 7: Abstützelement des Instrumententafelquerträgers 1

- 10: Vormontagegestell
- 11: Bolzen des Vormontagegestells

- 20: Handhabungsgerät
- 21: Eingriffselement
- 21.1: Stirnfläche des Eingriffselementes 21
- 22: Anschlag des Eingriffselementes 21

## Patentansprüche

1. Instrumententafelquerträger (1) für ein Fahrzeug mit Montageaufnahmen zur Abstützung in einem Vormontagegestell und zur Aufnahme durch ein Handhabungsgerät, der U-förmig mit einem Basisabschnitt (2) und zwei Schenkelabschnitten (3.1, 3.2) zur Verbindung mit den A-Säulen des Fahrzeugs ausgebildet ist, wobei der Basisabschnitt (2) wenigstens eine mit einem Fahrzeugtunnel des Fahrzeugs verbindbare Tunnelstütze (4.1) und wenigstens ein im wesentlichen in Fahrzeuglängsrichtung und zur Fahrerseite abgewandten Richtung verlaufendes Abstützelement (5) ausgebildet ist,
**dadurch gekennzeichnet, dass**
- zur zusätzlichen Abstützung des Instrumententafelquerträgers (1) in Fahrzeughochrichtung (Z-Richtung) im Vormontagegestell das Abstützelement (5) mit einer Z-Aufnahme (5.1) ausgebildet ist, und
- zur zusätzlichen Abstützung des Instrumententafelquerträgers (1) in Fahrzeughochrichtung (Z-Richtung) und in Fahrzeuglängsrichtung (X-Richtung) im Handhabungsgerät die Tunnelstütze (4.1) mit einer X/Z-Aufnahme (4.11) ausgebildet ist.

2. Instrumententafelquerträger (1) nach Anspruch 1,
**dadurch gekennzeichnet, dass** die Z-Aufnahme (5.1) als in Fahrzeugquerrichtung (Y-Richtung) verlaufendes Flanschelement (5.11) an das Abstützelement (5) angeformt ist, wobei zur Abstützung eine in Fahrzeugquerrichtung (Y-Richtung) verlaufende Stirnfläche (5.12) des Flanschelementes (5.11) als Auflagefläche ausgebildet ist.

3. Instrumententafelquerträger (1) nach Anspruch 1 oder 2,
**dadurch gekennzeichnet, dass** die X/Z-Aufnahme (4.11) als in Fahrzeuglängsrichtung (X-Richtung) verlaufendes Flanschelement (4.12) an die Tunnelstütze (4.1) angeformt ist, wobei eine in Fahrzeuglängsrichtung (X-Richtung) verlaufende Stirnfläche (4.13) des Flanschelementes (4.12) zur Abstützung in Fahrzeughochrichtung (Z-Richtung) und eine in Fahrzeughochrichtung (Z-Richtung) verlaufende Stirnfläche (4.14) des Flanschelementes (4.12) zur Abstützung in Fahrzeuglängsrichtung (X-Richtung) ausgebildet ist.

4. Instrumententafelquerträger (1) nach Anspruch 3,
**dadurch gekennzeichnet, dass** das Flanschelement (4.12) der X/Z-Aufnahme (4.11) mit einer Aussparung (4.15) ausgebildet ist.

5. Fahrzeug mit einem Instrumententafelquerträger (1) nach einem der vorhergehenden Ansprüche.

## Claims

1. Instrument panel crossmember (1) for a vehicle with mounting receptacles for support in a pre-assembly frame and for picking up by a handling device, which is of U-shaped design with a base section (2) and two leg sections (3.1, 3.2) for connecting to the A pillars of the vehicle, wherein the base section (2) forms at least one tunnel support (4.1) connectable to a vehicle tunnel of the vehicle and at least one support element (5) running substantially in the longitudinal direction of the vehicle and in a direction facing away from the driver's side,
**characterised in that**
- for the additional support of the instrument panel crossmember (1) in the vertical direction of the vehicle (Z direction) in the pre-assembly frame, the support element (5) is formed with a Z receptacle (5.1) and,
- for the additional support of the instrument panel crossmember (1) in the vertical direction of the vehicle (Z direction) and in the longitudinal direction of the vehicle (X direction) in the handling device, the tunnel support (4.1) is formed with an X/Z receptacle (4.11).

2. Instrument panel crossmember (1) according to claim 1,
**characterised in that** the Z receptacle (5.1) is formed on the support element (5) as a flange element (5.11) running in the transverse direction of the vehicle (Y direction), wherein for support a front face (5.12) of the flange element (5.11) running in the transverse direction of the vehicle (Y direction) is configured as a supporting surface.

3. Instrument panel crossmember (1) according to claim 1 or 2,
**characterised in that** the X/Z receptacle (4.11) is formed as a flange element (4.12) on the tunnel support (4.1) running in the longitudinal direction (X direction) of the vehicle, wherein a front face (4.13) of the flange element (4.12) running in the longitudinal direction (X direction) of the vehicle is designed to support in the vertical direction of the vehicle (Z direction) and a front face (4.14) of the flange element (4.12) running in the vertical direction of the vehicle (Z direction) to support in the longitudinal direction of the vehicle (X direction).

4. Instrument panel crossmember (1) according to claim 3,
**characterised in that** the flange element (4.12) of the X/Z receptacle (4.11) is configured with a recess (4.15).

5. Vehicle having an instrument panel crossmember (1) according to any one of the preceding claims.

## Revendications

1. Barre transversale de tableau de bord (1) pour un véhicule avec des logements de montage pour l'appui dans un bâti de prémontage et pour le logement par un appareil de manipulation, qui est réalisée en forme de U avec une section de base (2) et deux sections de branche (3.1, 3.2) pour la liaison aux colonnes A du véhicule, dans laquelle la section de base (2) est réalisée avec au moins un appui de tunnel (4.1) pouvant être relié à un tunnel de véhicule du véhicule et au moins un élément d'appui (5) s'étendant sensiblement dans la direction longitudinale du véhicule et dans la direction opposée au côté conducteur,
**caractérisée en ce que**
- pour l'appui supplémentaire de la barre transversale de tableau de bord (1) dans le sens de la hauteur du véhicule (direction Z) dans le bâti de prémontage, l'élément d'appui (5) est réalisé avec un logement Z (5.1), et
- pour l'appui supplémentaire de la barre transversale de tableau de bord (1) dans le sens de la hauteur du véhicule (direction Z) et dans la direction longitudinale du véhicule (direction X) dans l'appareil de manipulation, l'appui de tunnel (4.1) est réalisé avec un logement X/Z (4.11).

2. Barre transversale de tableau de bord (1) selon la revendication 1,
**caractérisée en ce que**
le logement Z (5.1) est formé en tant qu'élément de bride (5.11) s'étendant dans la direction transversale du véhicule (direction Y) sur l'élément d'appui (5), dans laquelle pour l'appui, une surface frontale (5.12) de l'élément de bride (5.11) s'étendant dans la direction transversale du véhicule (direction Y) est réalisée en tant que surface d'appui.

3. Barre transversale de tableau de bord (1) selon la revendication 1 ou 2, **caractérisée en ce que**
le logement X/Z (4.11) est formé en tant qu'élément de bride (4.12) s'étendant dans la direction longitudinale du véhicule (direction X) sur l'appui de tunnel (4.1), dans laquelle une surface frontale (4.13) de l'élément de bride (4.12) s'étendant dans la direction longitudinale du véhicule (direction X) est réalisée pour l'appui dans le sens de la hauteur du véhicule (direction Z) et une surface frontale (4.14) de l'élément de bride (4.12) s'étendant dans le sens de la hauteur du véhicule (direction Z) est réalisée pour l'appui dans la direction longitudinale du véhicule (direction X).

4. Barre transversale de tableau de bord (1) selon la revendication 3,
**caractérisée en ce que**
l'élément de bride (4.12) du logement X/Z (4.11) est réalisé avec un évidement (4.15).

5. Véhicule avec une barre transversale de tableau de bord (1) selon l'une quelconque des revendications précédentes.
